# EUROPEAN PATENT APPLICATION

(11) **EP 1 381 001 A1**
(43) Date of publication of application: **14.01.2004**
(21) Application number: 02714477.3
(22) Date of filing: 04.04.2002
(51) Int. Cl.: G07G 1/14, G07G 1/12

(54) **DATA TRANSMISSION/RECEPTION SYSTEM, DATA TRANSMISSION/RECEPTION METHOD, AND GOODS INFORMATION PROCESSING DEVICE**

(30) Priority: 05.04.2001 JP 2001107420
(71) Applicant: Ishida Co., Ltd., Kyoto-shi, Kyoto 606-8392 (JP)
(72) Inventor: SAKAMOTO, Shinsuke, Ritto-shi, Shiga 520-3026 (JP); KOYAMA, Hiroshi, Ritto-shi, Shiga 520-3026 (JP); TAMURA, Kazuhiko, Ritto-shi, Shiga 520-3026 (JP); WATANABE, Tetsuji, Ritto-shi, Shiga 520-3026 (JP)
(74) Representative: Leson, Thomas Johannes Alois, Dipl.-Ing.
(86) International application number: PCT/JP2002/003411
(87) International publication number: WO 2002/082394

(57) **Abstract**

The present invention aims to provide a data transmission/reception system, data transmission/reception method and product information processing device for the easy and safe transmission/reception of data between a product information processing device inside a store and a data processing device outside the store.

Email addresses of electronic scales 2 installed in a store 1 are stored on a headquarters data processing device 8, which sends the required product unit price data to each electronic scale 2. The sent data is stored on a provider mail server 13. Meanwhile, the electronic scales 2 installed inside the store 1 are connected to the Internet 6 via a line 5; the electronic scales 2 receive unit price data from the provider mail server 13 and calculate the price of products based on the received unit price data.

## Description

### (Technical Field)

The present invention relates to a data transmission/reception system including a product information processing device, a data transmission/reception method, and a product information processing device.

### (Background Technology)

In recent years, a variety of product information processing devices have come into use in supermarkets and other stores; these include electronic scales, labelers (label printing devices) that print product prices and the like on labels, and scale registers (electronic scales with cash register functions) that are capable of weighing products and calculating charges as cash register. An electronic scale, for example, will compute the price of a product based on that product's unit price, and can compute the sales record for a product based on weighing data for that product.

Japanese Laid-open Patent 2000-251185 discloses a method for data transmission/reception between a remote location and an electronic scale. In this data transmission/reception method, one of the electronic scales in a store has a LAN (Local Area Network) server function, and a web site is stored on this electronic scale with server function.

This web site is for the transmission/reception of product's unit price, tabulated data and the like between the electronic scale in the store and a device outside the store. The device outside the store accesses the web site stored on the electronic scale in the store over the Internet or through a dial-up connection, and transmits/receives data to and from the electronic scale.

However, the LAN inside the store is constituted to have a firewall to prevent unauthorized access from outside, and in order for outside devices, such as devices from store headquarters, to connect with the electronic scale, they need to have settings for getting past the firewall. For reasons of security, most attempts to access the web site in the store from outside are denied. Further, when for example there are a large number of electronic scales, there is a correspondingly large number of IP address settings, leading to even more complications.

In such cases, it is common for private IP addresses to be assigned to devices located on the store LAN; when data transmission/reception is to be made with a specific device, the troublesome operation must be performed of converting a global IP address to a private IP address. For this reason, if one wants to perform operations directed towards a specific device inside the LAN from outside the LAN, a system for specifying the device is need.

Further, when data is to be transmitted between a device outside the store and an electronic scale, the connection between the device outside the store and the electronic scale inside the store is made through a telephone line; thus the operations of connect/transmit/disconnect have to be repeated with each electronic scale, placing a large burden on the device outside the store and requiring much time.

Meanwhile, when data is to be transmitted from an electronic scale in the store to a device outside the store, a large burden is placed on the device outside the store, as it must process the requests of all the electronic scales.

### (Disclosure of the Invention)

It is an object of the present invention to provide a data transmission/reception system, data transmission/reception method and product information processing device making possible the safe and easy transmission/reception of data between a product information processing device inside a store and a data processing device outside the store.

The data transmission/reception system according to the first aspect of the present invention includes a product information processing device provided inside a store and having a communication function for the transmission/reception of email to and from a mail server provided outside the store and connected to the Internet, as well as a data processing function, and a data processing device provided outside the store and having a function for the transmission/reception of email to and from the mail server; the product information processing device and the data processing device transmit data between themselves by email sent through the mail server.

In the data transmission/reception system according to the present invention, the product information processing device located inside a store and the data processing device located outside the store transmit email between themselves through a mail server located outside the store; thus the product information processing device located inside a store and the data processing device located outside the store are able to transmit their respective data to each other.

As a result, transmission/reception of data between inside the store and outside the store can be carried out easily, without the need for complicated settings.

Moreover, because data transmission/reception is carried out by email via a mail server, there will be no obstructions from a firewall provided inside the store to prevent unauthorized access from outside the store, meaning that data transmission/reception between inside the store and outside the store can be conducted easily.

The data transmission/reception system according to a second aspect of the present invention employs the constitution of the data transmission/reception system according to the first aspect of the present invention, wherein the data processing device transmits product price information by email to the mail server, and the product information processing device receives the price information from the mail server and, based on the received price information, calculates the price of products using its data processing function.

In such cases, the data processing device outside the store sends product price information by email to the mail server. The product information processing device inside the store receives this price information by email from the mail server, and based on the received price information, calculates the price of products.

As a result, price information is received by email, so that the product price information stored in the product information processing device can be easily updated.

The data transmission/reception system according to a third aspect of the present invention employs the constitution of the data transmission/reception system according to either the first or second aspects of the present invention, wherein the product information processing device tabulates the sales records of products using its data processing function and sends the tabulated results as tabulated data by email to the mail server, and the data processing device receives the tabulated data from the mail server by email.

In such cases, the product information processing device inside the store sends the tabulated data containing the tabulated sales records of products by email to the mail server, and the data processing device outside the store receives the tabulated data by email from the mail server, and thus is able to obtain the latest tabulated data easily.

Moreover, because the product information processing device sends the tabulated data to the mail server there is no need to save the tabulated data on the product information processing device.

The data transmission/reception system according to a fourth aspect of the present invention employs the constitution of the data transmission/reception system according to any of the first through third aspects of the present invention, wherein the product information processing device has a self-diagnosis function, conducts self-diagnosis using this self-diagnosis function, and sends the results of the self-diagnosis by email to the mail server, and the data processing device receives the results of the self-diagnosis by email from the mail server.

With such a constitution, when an abnormality has occurred at a product information processing device inside the store, the data processing device outside the store, because it will receive the results of the self-diagnosis of the product information processing device by email from the mail server, will be able to confirm promptly the cause of the abnormality at the product information processing device.

As a result, there is less down time in comparison to cases where a technician is dispatched to the store to perform the maintenance.

The data transmission/reception system according to a fifth aspect of the present invention employs the constitution of the data transmission/reception system according to any of the first through fourth aspects of the present invention, wherein the product information processing device has a self-management function, manages the amount remaining of consumables, and based on the amount of consumables remaining, sends order data for such consumables to the mail server, and the data processing device receives the order data from the mail server by email.

In such cases, the product information processing device inside the store uses its self-management function to manage the amount remaining of consumables, and based on the amount of consumables remaining, sends order data for such consumables to the mail server. The data processing device outside the store receives the order data from the mail server by email, and thus is able to receive orders from the product information and prevent consumables from running out of stock.

The data transmission/reception method according to a sixth aspect of the present invention is a method that, through the transmission/reception of email by a product information processing device provided inside a store to and from a mail server outside the store that is connected to the Internet and through the transmission/reception of email by a data processing device provided outside the store to and from the mail server, provides for the transmission/reception of data, by email via a mail server, between a product information processing device provided inside a store and a data processing device provided outside a store.

In the data transmission/reception method according to the present invention, a product information processing device inside a store and a data processing device outside the store transmit and receive email between themselves via a mail server outside the store. Thus the product information processing device inside a store and the data processing device outside the store can transmit and receive their respective data between themselves. As a result, transmission/reception of data can be carried out easily between inside and outside the store, without any complicated settings.

Moreover, because transmission/reception of data is carried out by email to and from a mail server, the transmission/reception of data between inside the store and outside the store can be carried out easily, without obstruction from a firewall set up inside the store to provide unauthorized access from outside the store.

The product information processing device according to a seventh aspect of the present invention is a device provided inside a store and having a telecommunication function for transmission/reception of email to and from a mail server outside the store connected to the Internet.

In the present invention, the product information processing device inside a store transmits emails to and receives emails from a mail server outside the store. Through this constitution, the product information processing device and a data processing device outside the store can transmit their respective data to each other.

### (A Brief Description of the Drawings)

FIG. 1 is a block diagram showing the constitution of a data transmission/reception system in accordance with the present invention.
FIG. 2 is a block diagram showing the constitution of the electronic scale shown in FIG. 1

### (Best Modes for Working the Invention)

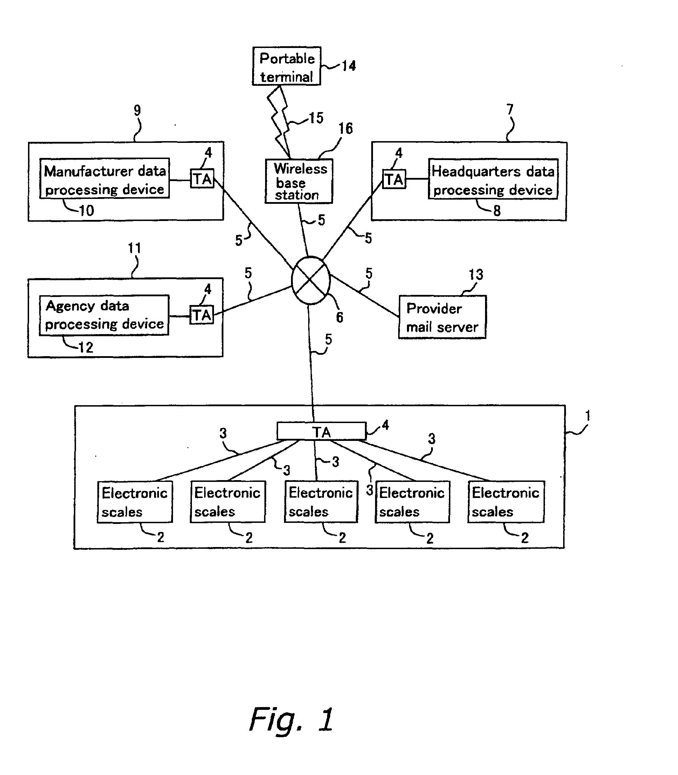

FIG. 1 is a block diagram showing the constitution of a data transmission/reception system according to the present invention. In FIG. 1, a plurality of electronic scales 2 are provided inside a store 1 and serve as product information processing devices. The electronic scales 2 provided inside the store 1 are connected via Ethernet cables 3 to a TA (terminal adaptor) 4 and can connect to the Internet 6 via a line 5.

A headquarters 7, which is responsible for general management of the store 1, is provided with a data processing device for management (hereinafter referred to as a headquarters data processing device) 8. This headquarters data processing device 8 is connected via a TA 4 to a line 5, through which it can connect to the Internet 6.

At a manufacturer 9 that manufactures the electronic scales 2 is a data processing device (hereinafter referred to as a manufacturer data processing device) 10, which performs a variety of data processing tasks. The manufacturer data processing device 10 is connected to a line 5 via a TA 4, through which it can connect to the Internet 6.

In addition, at an agency 11 that markets the electronic scales 2 manufactured by the manufacturer 9 is a data processing device (hereinafter referred to as an agency data processing device) 12, which performs a variety of data processing tasks. The agency data processing device 12 is connected to a line 5 via a TA 4, through which it can connect to the Internet 6.

Also, a portable terminal (e.g., a portable phone, PHS, etc.) 14 that is capable of transmission/reception of data using wireless signals 15 is connected to a line 5 via a wireless base station 16 that transmits and receives the wireless signals 15, and through this it can connect to the Internet 6.

An Internet provider mail server (hereinafter referred to as provider mail server) 13 is connected via a line 5 to the Internet 6. The electronic scales 2, the headquarters data processing device 8, the manufacturer data processing device 10 and agency data processing device 12 and the portable terminal 14 each have a unique email address, and each is capable of sending and receiving email to and from the provider mail server 13.

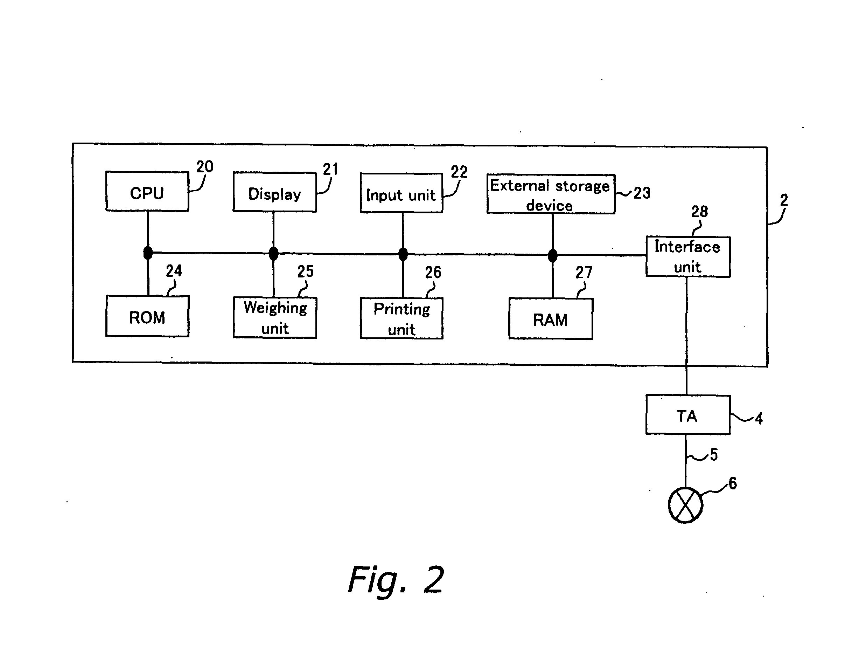

FIG 2 is a block diagram showing the constitution of an electronic scale 2. The electronic scale 2 is provided with a CPU (Central Processing Unit) 20, a display 21, an input unit 22, an external storage device 23, a ROM (Read Only Memory) 24, a weighing unit 25, a printing unit 26, a RAM (Random Access Memory) 27 and an interface unit 28.

The CPU 20 uses the RAM 27 to execute the programs stored on the external storage device 23, which is explained below. The display 21 displays product information such as product price. The input unit 22 may be a key[board], touch panel or the like, and is used for the input of product information such as product prices and instructions for weighing and printing and such.

Stored in the external storage device 23 are data processing programs for processing various sorts of data, a telecommunication program for connection to the Internet, as well as data sets for each product including such data as product code, product name, unit price, sale price, special price, additives, label image, label format, and department (e.g., fruits and vegetables, fresh fish), with sets for a plurality of products stored on a product master.

A system program is stored on the ROM 24. The weighing unit 25 calls the product code based on the product master, and based on the called data, weighs the product, and the printing unit 26 prints product information on a label. The interface unit 28 connects the electronic scale and the TA 4 to each other.

Registered on the headquarters data processing device 8 are the mail addresses of the electronic scales 2 installed in the store 1. The headquarters data processing device 8 sends as email to each electronic scale 2 the required unit prices of products. The sent unit prices are stored on the provider mail server 13.

The electronic scales 2 installed in the store 1 are connected to the Internet 6 via the line 5, and they receive data recorded on the product master, such as product code and unit price data, from the provider mail server 13. The external storage device 23, based on received data, rewrites or adds to the product master.

The electronic scales 2 create tabulated data based on sales for one day. The email address of the headquarters data processing device 8 is registered on the electronic scales 2 as the recipient for tabulated data; after the tabulated data is created this tabulated data is automatically sent as email to the provider mail server 13.

The sent tabulated data is stored on the provider mail server 13, and when the headquarters data processing device 8 connects to the provider mail server 13 and receives email therefrom, it receives the tabulated data as email. This tabulated data is detailed data, such as total sales volume for each product (or each product code), total sales for each department, daily sales totals, sales for each electronic scale, and the like.

Because the electronic scales 2 inside the store 1 and the headquarters data processing device 8 both transmit and receive email in this manner to and from the provider mail server 13, the transmission/reception of data between inside the store I and outside the store 1 can be carried out easily, without any complicated settings.

Moreover, the headquarters data processing device 8, by using a mailing list and the like to send data to the provider mail server 13, can transmit data for rewriting unit price and sale price to a plurality of electronic scales 2 at once.

Also, when the headquarters data processing device 8 receives email from a plurality of electronic scales 2, it is able to receive data from a plurality of electronic scales 2 at once through a single connection to the provider mail server 13. As a result, the burden on the headquarters data processing device 8 is decreased and the time required for the task is shortened.

Because the electronic scales 2 tabulate sales records and send the tabulated data as email, the electronic scales 2 do not have to save those sales records, meaning that the capacity of the external storage devices 23 provided at electronic scales 2 can be reduced.

Furthermore, the store manager of the store 1 and the manager at headquarters 7, by carrying with them the portable terminal 14, can send or receive data to or from the store 1 or headquarters 7 by email at any time. As a result, such managers, wherever they might be, can confirm tabulated data and unit price data at the store 1, and give instructions to modify or amend unit price data or instructions to give discounts on products based on tabulated data.

In addition, when an abnormality occurs at an electronic scale 2, the manufacturer data processing device 10 sends by email a diagnosis item command for diagnosing the abnormality to the electronic scale 2 at which the abnormality occurred. The diagnosis item commands are stored at the provider mail server 13.

By connecting to the provider mail server 13, the electronic scale 2 receives the diagnosis item command by email, and performs self-diagnosis for discovering the trouble, program abnormality or the like based on the diagnosis item command. The self-diagnosis results are sent by email to the manufacturer data processing device 10 and stored on the provider mail server 13.

The manufacturer data processing device 10 connects to the provider mail server 13 and receives the self-diagnosis results by email, and thereupon investigates the cause of the abnormality. Possible abnormalities include a zero error at the weighing unit 25 of an electronic scale 2, a display problem at the display 21, or a drive motor problem or worn-out thermal head at the print unit 26.

In this manner, the manufacturer data processing device 10, by receiving through the provider mail server 13 self-diagnosis results sent from the electronic scale 2 at which an abnormality occurred, can promptly identify the abnormality at the electronic scale 2, reducing the amount of downtime that would occur when a technician is dispatched to perform the maintenance.

In addition, when as the result of investigation by the manufacturer data processing device 10, it is determined that a program on the electronic scale 2 needs modification, a fix program can be created and sent by email to the electronic scale 2.

The electronic scale 2 receives the fix program from the provider mail server 13 by email and updates the relevant program, thus resolving the abnormality and further reducing the down time needed for maintenance.

In addition, the electronic scales 2 have a self-maintenance function for managing the remaining amounts of consumables, such as thermal heads and print labels, and when the remaining amount of a consumable part reaches a predetermined level, they can automatically create order data. In such cases, order data will be the order code for the consumable part and order amount.

The electronic scales 2 send the created order data to the agency data processing device 12, which has been set in advance as recipient. The sent data is stored on the provider mail server 13. When the agency data processing device 12 connects to the provider mail server 13, it receives the order data by email.

In this manner, because the electronic scales 2 have a self-management function, manage the amount of consumables remaining, create order data based on the remaining amounts and send the orders by email to the agency data processing device 12, situations can be prevented where consumables run out of stock.

Furthermore, because the electronic scales 2 perform self-management of consumables, there is no need for users to manage the electronic scales 2, meaning that less time and energy is spent on such tasks.

Because consumables information, such as product code, amount, and size for the consumable articles are registered in advance as order data, order mistakes can be prevented.

In addition, the manufacturer 9 of the electronic scales 2 can perform the service of designing images and logos and the like for the labels to be printed by the electronic scales 2, and the manufacturer data processing device 10 can send the created designs by email to the electronic scales 2 via the provider mail server 13. As a result, the designs on the labels printed by the electronic scales 2 can be used to express special features of the relevant store 1.

In order to prevent the mistaken rewriting of data caused by unrelated data mistakenly received because of a mistaken email address or similar error, the email addresses of the senders of email to be received can be restricted to certain senders. In addition, restrictions can be placed on the subject line of emails to be received, to prevent mistaken reception.

In order to prevent misuse of data by third parties following mistaken transmission of email, transmitted data can be encrypted.

As described above, by conducting transmission/reception of data between inside the store 1 and outside the store 1 via the provider mail server 13, there is no need for complicated settings in order to get past the firewall set up between inside the store 1 and outside the store 1, and the transmission/reception of data can be carried out easily and safely.

In the above-described embodiment, the electronic scales 2 correspond to a product information processing device in Claims. The headquarters data processing device 8, the manufacturer data processing device 10 and the agency data processing device 12 correspond to a data processing device in Claims. The provider mail server 13 corresponds to a mail server in Claims.

It should be noted that in the above-described embodiment the electronic scale 2 corresponds to the product information processing device, but labelers, cash registers and over devices may also be used. In other words, any device that operates based on the product master may be used.

Also, with regard to the automatic ordering of consumables, the ordering may be made when the amount of stock in a stocking device that stocks consumables falls to a low level. Also, the TA 4 may be a modem, CATV adapter or any other device that connects with the Internet 6.

It should be noted that when the product information processing device is a cash register, abnormalities to be checked by the manufacturer data processing device 10 would be such abnormalities as drive motor problems, display problems and the like.

### (Industrial Applicability)

With the present invention, the transmission/reception of data can be carried out between a product information processing device inside a store and a data processing device outside the store. As a result, the transmission/reception of data can be carried out easily, without any complicated settings, between inside the store and outside the store.

Furthermore, through the transmission/reception of data by email via a mail server, the transmission/reception of data between inside a store and outside a store can be carried out easily, without being subject to the obstructions of a firewall provided inside the store to prevent unauthorized access from outside the store.

## Claims

1. A data transmission/reception system comprising:
a product information processing device provided inside a store, said device having an email transmission/reception function for sending email to and receiving from a mail server outside the store connected to the Internet and a data processing function, and
a data processing device provided outside the store, said device being capable of sending email to and receiving email from said mail server;
wherein:
said product information processing device and said data processing device send and receive data to and from each other via said mail server by email.

2. The data transmission/reception system of claim 1, wherein
said data processing device sends product price information to said mail server by email, and
said product information processing device receives said price information from said mail server by email, and based on said price information calculates the price of products using said data processing function.

3. The data transmission/reception system of either claim 1 or claim 2, wherein
said product information processing device uses said data processing function to tabulate product sales records and sends the tabulated results as tabulated data to said mail server by email, and
said data processing device receives said tabulated data by email from said mail server.

4. A data transmission/reception system of any of claims 1 to 3, wherein
said product information processing device is provided with a self-diagnosis function, and uses said self-diagnosis function to perform self-diagnosis and sends the self-diagnosis results by email to said mail server, and
said data processing device receives said self-diagnosis results from said mail server by email.

5. A data transmission/reception system of any of claims 1 to 4, wherein
said product information processing device is provided with a self-management function, and using said self-management function manages the amount of consumables remaining, and based on the amount of consumables remaining sends order data to said mail server for ordering said consumables, and
said data processing device receives said order data from said mail server by email.

6. A data transmission/reception method wherein
through the sending and receiving of email by a product information processing device provided inside a store to and from a mail server outside the store connected to the Internet, and
the sending and receiving of email by a data processing device provided outside a store to and from said mail server,
said product information processing device and said data processing device send and receive data to and from each other via said mail server by email.

7. A product information processing device provided inside a store having the function of sending email to and receiving email from a mail server connected to the Internet provided outside the store.
